# EUROPÄISCHE PATENTSCHRIFT

(11) **EP 1 263 859 B1**
(45) Veröffentlichungstag und Bekanntmachung des Hinweises auf die Patenterteilung: **13.08.2003**
(21) Anmeldenummer: 01909820.1
(22) Anmeldetag: 06.03.2001
(51) Int. Cl.: C08K 5/101, C08L 67/02, C08L 67/04, B05D 5/00, C08J 7/04

(54) **VERFAHREN ZUR REDUKTION DER WASSERDAMPFPERMEABILITÄT VON FOLIEN ODER BESCHICHTUNGEN**
METHOD FOR REDUCING THE PERMEABILITY OF FILMS OR COATINGS TO WATER VAPOUR
PROCEDE DE REDUCTION DE LA PERMEABILITE A LA VAPEUR D'EAU DE FILMS OU DE REVETEMENTS

(30) Priorität: 08.03.2000 DE 10010826
(43) Veröffentlichungstag der Anmeldung: 11.12.2002
(73) Patentinhaber: BASF AKTIENGESELLSCHAFT, 67056 Ludwigshafen (DE)
(72) Erfinder: WITT, Uwe, 67112 Mutterstadt (DE); SKUPIN, Gabriel, 67346 Speyer (DE)
(86) Internationale Anmeldenummer: EP0102491
(87) Internationale Veröffentlichungsnummer: WO01066630

(56) Entgegenhaltungen:
- EP-A- 0 529 396
- EP-A- 0 596 437
- WO-A-93/11937
- WO-A-94/12157
- DE-A- 4 440 858
- DE-A- 19 638 488
- NL-C- 1 006 548
- US-A- 2 292 393
- US-A- 5 500 465
- US-A- 5 861 216
- PATENT ABSTRACTS OF JAPAN vol. 017, no. 154 (C-1040), 26. März 1993 (1993-03-26) & JP 04 318074 A (SHINTO PAINT CO LTD), 9. November 1992 (1992-11-09)

## Beschreibung

Die vorliegenden Erfindung betrifft ein Verfahren zur Reduktion der Wasserdampfpermeabilität von Folien oder Beschichtungen aus Bienenwachs oder Montanesterwachs oder deren Mischungen enthaltenden Polymermassen (Q). Darüber hinaus betrifft die vorliegende Erfindung Folien oder Beschichtungen aus Bienenwachs oder Montanesterwachs oder deren Mischungen enthaltenden Polymermassen (Q). Des weiteren betrifft die vorliegende Erfindung Zusammensetzungen, die Z₁) 40 bis 98,5 Gew.-% mindestens eines teilaromatischen Polyesters, Z₂) 0,5 bis 20 Gew.-% Stärke, Cellulose oder deren Mischungen, Z₃) 1 bis 20 Gew.-% Bienenwachs oder Montanesterwachs oder deren Mischungen und Z₄) 0 bis 20 Gew.-% mindestens eines Additives enthalten, sowie deren Verwendung als Vormischungen und zur Reduktion der Wasserdampfpermeabilität.

Polymermassen für die Herstellung von Folien oder Beschichtungen sind an sich bekannt. Viele Folien oder Beschichtungen sind für viele Zwecke, beispielsweise für deren Einsatz im Lebensmittelsektor, nicht hinreichend undurchlässig gegenüber Wasserdampf. Bekannt war auch, daß, Polymermassen in ihrer reinen Form in der Regel nicht alle technologischen Anforderungen erfüllen. Erst durch den Zusatz von Zuschlagstoffen, den sogenannten Additiven, werden sie wirtschaftlich und technologisch brauchbar. Da die Additive meist in nur geringen Mengen in den Polymermassen nötig sind, das Einarbeiten und homogene Verteilen so geringer Mengen an Zusatzstoffen aber technisch oft schwierig ist, werden die Additive meist in Form von Vormischungen, sogenannten Masterbatches, in denen sie in höherer Konzentration vorhanden sind, den Polymermassen zugegeben.

Werden Schmiermittel wie Wachse als Zuschlagstoffe verwendet, stellt sich in der Praxis das Problem, daß die Schmiermittel sich oft nicht gut in die Polymermatrix einmischen lassen sondern dort agglomerieren und an deren Oberfläche verbleiben. Dies führt zum einen zu Ablagerungen von Schmiermittel an den Wänden des jeweils verwendeten Mischelements z.B. des Extruders. Zum anderen lassen sich, bedingt durch die Außenschmierung, auch danach zuzugebende Zusatzstoffe nur noch schlecht einmischen. Dieses Verhalten der Schmiermittel wirkt sich bei der Herstellung von Masterbatches besonders beeinträchtigend aus, da sich die Vormischungen mit den benötigten hohen Wachs- und Additivkonzentrationen nur schwer herstellen lassen.

Zusammensetzungen auf der Basis biologisch abbaubarer Polymerer, Stärke oder Cellulose und Wachsen waren bekannt (DE-A1 44 40 858).

So offenbart die WO 98/14326 Zusammensetzungen, die Polyester wie Polyhydroxyalkanoate und von 2 bis 30 Gewichtsteile, bezogen auf 100 Gewichtsteile der Zusammensetzung, Wachs als Additiv enthalten können. Allgemein wird darüber hinaus offenbart, daß die Zusammensetzungen auch faser- oder plättchenförmige Füllstoffe oder Verstärkungsmittel enthalten können.

Des weiteren waren biologisch abbaubare Laminate bekannt, die eine wachsartige Schicht umfassen, die aus einem Wachs als Hauptkomponente und einem Polymeren wie Polyvinylalkohol oder einem Acetat oder Acrylat aufgebaut ist. Diese wachsartige Schicht kann zudem als Verdickungsmittel z.B. Stärke, Methylcellulose oder Hydroxymethylcellulose enthalten (EP-B1 616 569).

Die WO 98/20073 ist mit stärkehaltigen Zusammensetzungen auf der Basis biologisch abbaubarer Polymerer wie aliphatisch-aromatischer Copolyester befaßt. Diese enthalten als Verträglichkeitsvermittler zwischen der polymeren Matrix und dem darin dispergierten Füllstoff veresterte Polyole, also Fette, bzw. Öle in Mengen von 0,5 bis 20 Gew.-%. Die Stärkemengen können beispielsweise von 20 bis 95 Gew.-%, bevorzugt von 30 bis 75 Gew.-% betragen. Wachse sind als Additive erwähnt.

Aus der WO 94/3543 gehen biologisch abbaubare Zusammensetzungen hervor, die als Fließverbesserer unter anderem auch Polyolefinwachse in Mengen von 5 bis 70 Gew.-%, bezogen auf die Gesamtmasse der jeweiligen Zusammensetzung enthalten können. Dabei sind laut dieser Schrift die Fließverbesserer besonders nützlich für die Herstellung von Zusammensetzungen mit hohen Füllstoffgehalten. Beispielhaft werden Zusammensetzungen auf der Basis von Polyethylenvinylalkohol, Polyethylenacrylsäure, 40 bzw. 25 % Holzmehl und 7 bzw. 5 % Polyethylenwachs auf ihre mechanischen Eigenschaften hin untersucht.

Aufgabe der vorliegenden Erfindung war es, ein Verfahren zur Reduktion der Wasserdampfpermeabilität von Folien oder Beschichtungen zu finden. Insbesondere sollte ein Verfahren zur Verfügung gestellt werden, bei dem Folien bzw. Beschichtungen erhalten werden, die ökologisch verträglich sind. Eine weitere Aufgabe bestand darin Folien bzw. Beschichtungen mit reduzierter Wasserdampfpermeabilität zu finden, die sich im Lebensmittelsektor einsetzen lassen. Schließlich sollten Folien bzw. Beschichtungen zur Verfügung gestellt werden, die eine gute Oberfläche aufweisen.

Überraschender Weise wurde gefunden, daß die Verwendung von Bienenwachs oder Montanesterwachs oder deren Mischungen in Polymermassen die Wasserdampfpermeabilität von daraus hergestellten Folien oder Beschichtungen reduziert. Überraschenderweise wurde des Weiteren gefunden, daß sich Stärken oder Cellulosen als Phasenvermittler für die Einbindung von Bienenwachs oder Montanesterwachs oder deren Mischungen in eine Polymermatrix eignen, so daß die gestellte Aufgabe durch ein Verfahren zur Reduktion der Wasserdampfpermeabilität von Folien oder Beschichtungen aus Bienenwachs oder Montanesterwachs oder deren Mischungen enthaltenden Polymermassen (Q) erfüllt wird, bei dem man in einem ersten Schritt eine Zusammensetzung (Z), enthaltend Z₁) 40 bis 98,5 Gew.-% mindestens ein mit den Q zu Grunde liegenden Polymeren (Q1) verträglichen Polymeren, Z₂) 0,5 bis 20 Gew.-% Stärke, Cellulose oder deren Mischungen als Phasenvermittler, Z₃) 1 bis 20 Gew.-% Bienenwachs oder Montanesterwachs oder deren Mischungen und Z₄) 0 bis 20 Gew.-% mindestens eines Additives, wobei sich die Gewichtsprozente auf das Gesamtgewicht von Z beziehen, herstellt und in einem zweiten Schritt die Zusammensetzung Z mit dem Q zu Grunde liegenden Polymeren Q1 vereinigt.

Bevorzugte Zusammensetzungen Z, die erfindungsgemäß als Vormischungen verwendet werden können, enthalten von 60 bis 97 Gew.-% Z₁, 1 bis 15 Gew.-% Z₂, 2 bis 15 Gew.-% Z₃, und 0 bis 10 Gew.-% Z₄. Nach einer anderen bevorzugten Ausführungsform enthalten die Zusammensetzungen Z von 70 bis 95,9 Gew.-% Z₁, von 1 bis 10 Gew. -% Z₂, von 3 bis 10 Gew.-% Z₃ und von 0,1 bis 10 Gew.-% Z₄.

Die Polymeren Z₁ unterliegen keiner prinzipiellen Beschränkung. Es werden allerdings thermoplastisch verarbeitbare Polymere bevorzugt. Zu den bevorzugten Polymeren zählen biologisch abbaubare Polymere. Darunter fallen sowohl Polymere unterschiedlichster Struktur als auch Mischungen unterschiedlicher biologisch abbaubarer Polymerer.

Polymere Umsetzungsprodukte der Milchsäure können als biologisch abbaubare Polymere im erfindungsgemäßen Verfahren verwendet werden. Diese sind an sich bekannt oder können nach an sich bekannten Verfahren hergestellt werden. Neben Polylactid können auch Co- oder Blockcopolymere auf der Basis von Milchsäure und weiteren Monomeren verwendet werden. Meist werden lineare Polylactide eingesetzt. Es können aber auch verzweigte Milchsäurepolymerisate verwendet werden. Als Verzweiger können z.B. mehrfunktionelle Säuren oder Alkohole dienen. Beispielhaft können Polylactide genannt werden, die im wesentlichen aus Milchsäure oder deren C₁- bis C₄-Alkylester oder deren Mischungen sowie mindestens einer aliphatischen C₄- bis C₁₀-Dicarbonsäure und mindestens einem C₃- bis C₁₀-Alkanol mit drei bis fünf Hydroxygruppen erhältlich sind.

Beispiele biologisch abbaubarer Polymerer sind darüber hinaus aliphatische Polyester. Zu diesen zählen Homopolymere aliphatischer Hydroxycarbonsäuren oder Lactone aber auch Copolymere oder Blockcopolymere unterschiedlicher Hydroxycarbonsäuren oder Lactonen oder deren Mischungen. Diese aliphatischen Polyester können daneben als Bausteine Diole und/oder Isocyanate enthalten. Darüber hinaus können die aliphatischen Polyester auch Bausteine enthalten, die sich von tri- oder mehrfunktionellen Verbindungen wie Epoxiden, Säuren oder Triolen ableiten. Letzere Bausteine können einzeln oder es können mehrere davon oder auch zusammen mit den Diolen und/oder Isocyanaten in den aliphatischen Polyestern enthalten sein.

Verfahren zur Herstellung aliphatischer Polyester sind dem Fachmann bekannt. Die aliphatischen Polyester weisen im allgemeinen Molekulargewichte (Zahlenmittelwert) im Bereich von 10 000 bis 100 000 g/mol auf.

Zu den besonders bevorzugten aliphatischen Polyestern zählt Polycaprolacton.

Poly-3-hydroxybutansäureester und Copolymere der 3-Hydroxybutansäure oder deren Mischungen mit der 4-Hydroxybutansäure und der 3-Hydroxyvaleriansäure, insbesondere einem Gewichtsanteil von bis zu 30, bevorzugt bis zu 20 Gew.-% der letztgenannten Säure, sind besonders bevorzugte aliphatische Polyester. Zu den geeigneten Polymeren dieses Typs zählen auch die mit R-stereospezifischer Konfiguration wie sie aus der WO 96/09402 bekannt sind. Polyhydroxybutansäureester oder deren Copolymeren können mikrobiell hergestellt werden. Verfahren zur Herstellung aus verschiedenen Bakterien und Pilzen sind z.B. den Nachr. Chem Tech. Lab. 39, 1112 - 1124 (1991) zu entnehmen, ein Verfahren zur Herstellung sterospezifischer Polymerer ist aus der WO 96/09402 bekannt.

Des weiteren können auch Blockcopolymere aus den genannten Hydroxycarbonsäuren oder Lactonen, deren Mischungen, Oligomeren oder Polymeren eingesetzt werden. Weitere aliphatische Polyester, sind solche, die aus aliphatischen oder cycloaliphatischen Dicarbonsäuren oder deren Mischungen und aliphatischen oder cycloaliphatischen Diolen oder deren Mischungen aufgebaut sind. Erfindungsgemäß können sowohl statistische als auch Blockcopolymere verwendet werden.

Die erfindungsgemäß geeigneten aliphatischen Dicarbonsäuren haben im allgemeinen 2 bis 10 Kohlenstoffatome, vorzugsweise 4 bis 6 Kohlenstoffatome. Sie können sowohl linear als auch verzweigt sein. Die im Rahmen der vorliegenden Erfindung verwendbaren cycloaliphatischen Dicarbonsäuren sind in der Regel solche mit 7 bis 10 Kohlenstoffatomen und insbesondere solche mit 8 Kohlenstoffatomen. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Malonsäure, Bernsteinsäure, Glutarsäure, Adipinsäure, Pimelinsäure, Acelainsäure, Sebacinsäure, Fumarsäure, 2,2-Dimethylglutarsäure, Suberinsäure, 1,3-Cyclopentandicarbonsäure, 1,4-Cyclohexandicarbonsäure, 1,3-Cyclohexandicarbonsäure, Diglykolsäure, Itaconsäure, Maleinsäure und 2,5-Norbornandicarbonsäure, worunter Adipinsäure bevorzugt ist.

Als esterbildende Derivate der oben genannten aliphatischen oder cycloaliphatischen Dicarbonsäuren, die ebenso verwendbar sind, sind insbesondere die Di-C₁- bis C₆-Alkylester, wie Dimethyl-, Diethyl-, Di-n-propyl, Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildenden Derivate, einzeln oder als Gemisch aus zwei oder mehr davon eingesetzt werden.

Beispiele der in Betracht kommenden aliphatischen Polyester sind aliphatische Copolyester wie sie in der WO 94/14870 beschrieben sind, insbesondere aliphatische Copolyester aus Bernsteinsäure, deren Diester oder deren Mischungen mit anderen aliphatischen Säuren bzw. Diestern wie Glutarsäure und Butandiol oder Mischungen aus diesem Diol mit Ethylenglycol, Propandiol oder Hexandiol oder deren Mischungen.

Aliphatische Polyester dieser Art weisen im allgemeinen Molekulargewichte (Zahlenmittelwert) im Bereich von 10 000 bis 100 000 g/mol auf.

Ebenso können die aliphatischen Polyester statistische oder Block-Copolyester sein, die weitere Monomere enthalten. Der Anteil der weiteren Monomeren beträgt in der Regel bis zu 10 Gew.-%. Bevorzugte Comonomere sind Hydroxcarbonsäuren oder Lactone oder deren Mischungen.

Selbstverständlich können auch Mischungen aus zwei oder mehr Comonomeren und/oder weiteren Bausteinen, wie Epoxiden oder mehrfunktionellen aliphatischen oder aromatischen Säuren oder mehrfunktionellen Alkoholen zur Herstellung der aliphatischen Polyester eingesetzt werden.

Des weiteren können die Polymermassen auf teilaromatischen Polyestern basieren. Darunter sollen erfindungsgemäß auch Polyesterderivate verstanden werden wie Polyetherester, Polyesteramide oder Polyetheresteramide. Zu den geeigneten biologisch abbaubaren teilaromatischen Polyestern gehören lineare nicht kettenverlängerte Polyester (WO 92/09654). Bevorzugt werden kettenverlängerte und/oder verzweigte teilaromatische Polyester. Letztere sind aus den eingangs genannten Schriften , WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht wie Blends von teilaromatischen Polyestern mit Polylactid.

Zu den bevorzugten teilaromatischen Polyestern zählen Polyester, die als wesentliche Komponenten
A) eine Säurekomponente aus
   a1) 30 bis 95 mol-% mindestens einer aliphatischen oder mindestens einer cycloaliphatischen Dicarbonsäure oder deren esterbildende Derivate oder Mischungen davon
   a2) 5 bis 70 mol% mindestens einer aromatischen Dicarbonsäure oder deren esterbildendem Derivat oder Mischungen davon und
   a3) 0 bis 5 mol% einer sulfonatgruppenhaltigen Verbindung,
B) eine Diolkomponente ausgewählt aus mindestens einem C₂-bis C₁₂-Alkandiol und mindestens einem C₅- bis C₁₀-Cycloalkandiol oder Mischungen davon
   und gewünschtenfalls darüber hinaus eine oder mehrere Komponenten ausgewählt aus
C) einer Komponente ausgewählt aus
   c1) mindestens einer Etherfunktionen enthaltenden Dihydroxyverbindung der Formel I

      HO-[(CH₂)ₙ-O]ₘ-H (I)

      in der n für 2, 3 oder 4 und m für eine ganze Zahl von 2 bis 250 stehen
   c2) mindestens einer Hydroxycarbonsäure der Formel IIa oder IIb 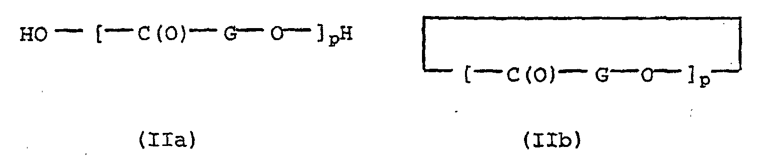 in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
   c3) mindestens einem Amino-C₂- bis C₁₂-alkanol oder mindestens einem Amino-C₅-bis C₁₀-cycloalkanol oder Mischungen davon
   c4) mindestens einem Diamino-C₁-bis C₈-Alkan
   c5) mindestens einem 2,2'-Bisoxazolins der allgemeinen Formel III 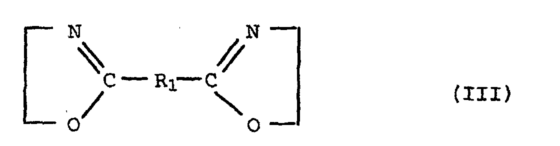 wobei R¹ eine Einfachbindung, eine (CH₂)_{z}-Alkylengruppe, mit z = 2, 3 oder 4, oder eine Phenylengruppe bedeutet
   c6) mindestens einer Aminocarbonsäure ausgewählt aus der Gruppe, bestehend aus den natürlichen Aminosäuren, Polyamiden mit einem Molekulargewicht von höchstens 18000g/mol, erhältlich durch Polykondensation einer Dicarbonsäure mit 4 bis 6 C-Atomen und einem Diamin mit 4 bis 10 C-Atomen, Verbindungen der Formeln IV a und IVb 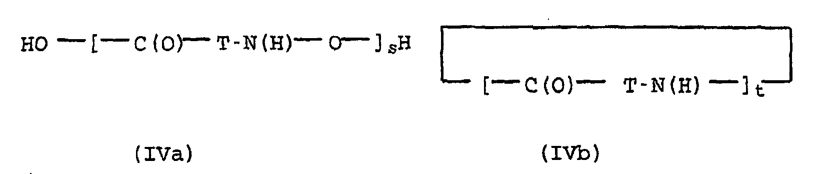 in der s eine ganze Zahl von 1 bis 1500 und t eine ganze Zahl von 1 bis 4 bedeuten, und T für einen Rest steht, der ausgewählt ist aus der Gruppe bestehend aus Phenylen, -(CH₂)ₙ-, wobei n eine ganze Zahl von 1 bis 12 bedeutet, -C(R²)H- und -C(R²)HCH₂, wobei R² für Methyl oder Ethyl steht,
      und Polyoxazolinen mit der wiederkehrenden Einheit V 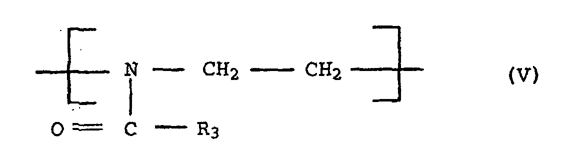 in der R³ für Wasserstoff, C₁-C₆-Alkyl, C₅-C₈-Cycloalkyl, unsubstituierten oder mit C₁-C₄-Alkylgruppen bis zu dreifach substituiertes Phenyl oder für Tetrahydrofuryl steht,
      oder Mischungen aus c1 bis c6
      und
      einer Komponente ausgewählt aus
   d1) mindestens einer Verbindung mit mindestens drei zur Esterbildung befähigten Gruppen,
   d2) mindestens eines Isocyantes
   d3) mindestens eines Divinylethers
      oder Mischungen aus d1) bis d3) enthalten.

Die Säurekomponente A der bevorzugten teilaromatischen Polyester enthält von 30 bis 70, insbesondere von 40 bis 60 mol% a1 und von 30 bis 70, insbesondere von 40 bis 60 mol% a2.

Als aliphatische, bzw. cycloaliphatische Säuren und die entsprechenden Derivate a1 kommen die oben genannten in Betracht. Besonders bevorzugt wird Adipinsäure oder Sebacinsäure deren jeweiligen esterbildenden Derivate oder Mischungen davon eingesetzt. Besonders bevorzugt wird Adipinsäure oder deren esterbildende Derivate, wie deren Alkylester oder deren Mischungen eingesetzt.

Als aromatische Dicarbonsäure a2 sind im allgemeinen solche mit 8 bis 12 Kohlenstoffatomen und vorzugsweise solche mit 8 Kohlenstoffatomen zu nennen. Beispielhaft erwähnt seien Terephthalsäure, Isophthalsäure, 2,6-Naphthoesäure und 1,5-Naphthoesäure sowie esterbildende Derivate davon. Dabei sind insbesondere die Di-C₁-C₆-Alkylester, z.B. Dimethyl-, Diethyl-, Di-n-propyl-, Diiso-propyl, Di-n-butyl-, Di-iso-butyl, Di-t-butyl, Di-n-pentyl-, Di-iso-pentyl oder Di-n-hexylester zu nennen. Die Anhydride der Dicarbonsäuren a2 sind ebenso geeignete esterbildende Derivate.

Prinzipiell können jedoch auch aromatische Dicarbonsäuren a2 mit einer größeren Anzahl an Kohlenstoffatomen, beispielsweise bis zu 20 Kohlenstoffatomen, eingesetzt werden.

Die aromatischen Dicarbonsäuren oder deren esterbildende Derivate a2 können einzeln oder als Gemisch aus zwei oder mehr davon eingesetzt werden. Besonders bevorzugt wird Terephthalsäure oder deren esterbildende Derivate wie Dimethylterephthalat, verwendet.

Als sulfonatgruppenhaltige Verbindung setzt man üblicherweise ein Alkali- oder Erdalkalimetallsalz einer sulfonatgruppenhaltigen Dicarbonsäure oder deren esterbildende Derivate ein, bevorzugt Alkalimetallsalze der 5-Sulphoisophthalsäure oder deren Mischungen, besonders bevorzugt das Natriumsalz,

Nach einer der bevorzugten Ausführungsformen enthält die Säurekomponente A von 40 bis 60 mol% a1, von 40 bis 60 mol% a2 und von 0 bis 2 mol% a3. Nach einer weiteren bevorzugten Ausführungsform enthält die Säurekomponente A von 40 bis 59,9 mol-% a1, von 40 bis 59,9 mol-% a2 und von 0,1 bis 1 mol-% a3, insbesondere von 40 bis 59,8 mol-% a1, von 40 bis 59,8 mol-% a2 und von 0,2 bis 0,5 mol-% a3.

Im allgemeinen werden die Diole B unter verzweigten oder linearen Alkandiolen mit 2 bis 12 Kohlenstoffatomen, bevorzugt 4 bis 6 Kohlenstoffatomen, oder Cycloalkandiolen mit 5 bis 10 Kohlenstoffatomen ausgewählt.

Beispiele geeigneter Alkandiole sind Ethylenglykol, 1,2-Propandiol, 1,3-Propandiol, 1,2-Butandiol, 1,4-Butandiol, 1,5-Pentandiol, 2,4-Dimethyl-2-ethylhexan-1,3-diol, 2,2-Dimethyl- 1,3-propandiol, 2-Ethyl-2-butyl-1,3-propandiol, 2-Ethyl-2-isobutyl-1,3-propandiol, 2,2,4-Trimethyl-1,6-hexandiol, insbesondere Ethylenglykol, 1,3-Propandiol, 1,4-Butandiol und 2,2-Dimethyl-1,3-propandiol (Neopentylglykol); Cyclopentandiol, 1,4-Cyclohexandiol, 1,2-Cyclohexandimethanol, 1,3-Cyclohexandimethanol, 1,4-Cyclohexandimethanol oder 2,2,4,4-Tetramethyl-1,3-cyclobutandiol. Es können auch Mischungen unterschiedlicher Alkandiole verwendet werden.

Abhängig davon ob ein Überschuß an Säure- oder OH-Endgruppen gewünscht wird, kann entweder die Komponente A oder die Komponente B im Überschuß eingesetzt werden. Nach einer bevorzugten Ausführungsform kann das Molverhältnis der eingesetzten Komponenten A zu B im Bereich von 0,4:1 bis 1,5:1, bevorzugt im Bereich von 0,6:1 bis 1,1:1 liegen.

Neben den Komponenten A und B können die Polyester, auf denen die Folien oder Beschichtungen basieren, die im erfindungsgemäßen Verfahren verwendet werden können, weitere Komponenten enthalten.

Als Dihydroxyverbindungen c1 setzt man bevorzugt Diethylenglykol, Triethylenglykol, Polyethylenglykol, Polypropylenglykol und Polytetrahydrofuran (Poly-THF), besonders bevorzugt Diethylenglykol, Triethylenglykol und Polyethylenglykol, ein, wobei man auch Mischungen davon oder Verbindungen, die unterschiedliche Variablen n aufweisen (siehe Formel I), beispielsweise Polyethylenglykol, das Propyleneinheiten (n = 3) enthält, beispielsweise erhältlich durch Polymerisation nach an sich bekannten Methoden von zuerst Ethylenoxid und anschließend mit Propylenoxid, besonders bevorzugt ein Polymer auf Basis von Polyethylenglykol, mit unterschiedlichen Variablen n, wobei Einheiten gebildet aus Ethylenoxid überwiegen. Das Molekulargewicht (Mₙ) des Polyethylenglykols wählt man in der Regel im Bereich von 250 bis 8000, bevorzugt von 600 bis 3000 g/mol.

Nach einer der bevorzugten Ausführungsformen können beispielsweise von 15 bis 98, bevorzugt 60 bis 99,5 mol% der Diole B und 0,2 bis 85, bevorzugt 0,5 bis 30 mol% der Dihydroxyverbindungen c1, bezogen auf die molare Menge von B und c1, für die Herstellung der teilaromatischen Polyester verwendet werden.

In einer bevorzugten Ausführungsform setzt man als Rydroxycarbonsäure c2) ein: Glycolsäure, D-, L-, D,L-Milchsäure, 6-Hydroxyhexansäure, deren cyclische Derivate wie Glycolid (1,4-Dioxan-2,5-dion), D-, L-Dilactid (3,6-dimethyl-1,4- dioxan-2,5-dion), p-Hydroxybenzoesäure sowie deren Oligomere und Polymere wie 3-Polyhydroxybuttersäure, Polyhydroxyvaleriansäure, Polylactid (beispielsweise als EcoPLA® (Fa. Cargill) erhältlich) sowie eine Mischung aus 3-Polyhydroxybuttersäure und Polyhydroxyvaleriansäure (letzteres ist unter dem Namen Biopol® von Zeneca erhältlich), besonders bevorzugt für die Herstellung von teilaromatischen Polyester die niedermolekularen und cyclischen Derivate davon.

Die Hydroxycarbonsäuren können beispielsweise in Mengen von 0,01 bis 50, bevorzugt von 0,1 bis 40 Gew.-% bezogen auf die Menge an A und B verwendet werden.

Als Amino-C₂-C₁₂-alkanol oder Amino-C₅-C₁₀-cyloalkanol (Komponente c3), wobei hierunter auch 4-Aminomethylcyclohexanmethanol fallen soll, setzt man bevorzugt Amino-C₂-C₆-alkanole wie 2-Aminoethanol, 3-Aminopropanol, 4-Aminobutanol, 5-Aminopentanol, 6-Aminohexanol sowie Amino-C₅-C₆-cyloalkanole wie Aminocyclopentanol und Aminocyclohexanol oder Mischungen davon ein.

Als Diamino-C₁-C₈-alkan (Komponente c4) setzt man bevorzugt Diamino-C₄-C₆-alkane ein wie 1,4-Diminobutan, 1,5-Diaminopentan und 1,6-Diaminohexan (Hexamethylendiamin, "HMD").

Nach einer bevorzugten Ausführungsform kann von 0,5 bis 99,5, bevorzugt von 70 bis 98,0 mol% der Diolkomponente B, 0,5 bis 99,5, bevorzugt 0,5 bis 50 mol% c3 und von 0 bis 50, bevorzugt von 0 bis 35 mol% c4, bezogen auf die Molmenge von B, c3 und c4, für die Herstellung der teilaromatischen Polyester eingesetzt werden.

Die 2,2'-Bisoxazoline c5 der allgemeinen Formel III sind im allgemeinen erhältlich durch das Verfahren aus Angew, Chem. Int. Edit., Vol. 11 (1972), S, 287-288. Besonders bevorzugte Bisoxazoline sind solche, in denen R¹ eine Einfachbindung, eine (CH₂)_{q}-Al-kylengruppe, mit q = 2,3 oder 4 wie Methylen, Ethan-1,2-diyl, Propan-1,3-diyl, Propan-1,2-diyl, oder eine Phenylengruppe bedeutet. Als besonders bevorzugte Bisoxazoline seien 2,2'-Bis(2-oxazolin), Bis (2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis (2-oxazolinyl)benzol, 1,2-Bis(2-oxazolinyl)benzol oder 1,3-Bis(2-oxazolinyl)benzol genannt.

Zur Herstellung der teilaromatischen Polyester können beispielsweise von 70 bis 98 mol%, B1 bis 30 mol% c3 und 0,5 bis 30 mol% c4 und 0,5 bis 30 mol% c5, jeweils bezogen auf die Summe der Molmengen der Komponenten B1, c3, c4 und c5, verwendet werden. Nach einer anderen bevorzugten Ausführungsform ist es möglich von 0,1 bis 5, bevorzugt 0,2 bis 4 Gew.-% c5, bezogen auf das Gesamtgewicht von A und B, einzusetzen.

Als Komponente c6 können natürliche Aminocarbonsäuren verwendet werden. Zu diesen zählen Valin, Leucin, Isoleucin, Threonin, Methionin, Phenylalanin, Tryptophan, Lysin, Alanin, Arginin, Aspartamsäure, Cystein, Glutaminsäure, Glycin, Histidin, Prolin, Serin, Tryosin, Asparagin oder Glutamin.

Bevorzugte Aminocarbonsäuren der, allgemeinen Formeln IVa und IVb sind die, worin s eine ganze Zahl von 1 bis 1000 und t eine ganze Zahl von 1 bis 4, bevorzugt 1 oder 2 bedeuten und T ausgewählt ist aus der Gruppe Phenylen und -(CH₂)ₙ-, wobei n 1, 5 oder 12 bedeutet.

Ferner kann c6 auch ein Polyoxazolin der allgemeinen Formel V sein. C6 kann aber auch eine Mischung unterschiedlicher Aminocarbonsäuren und/oder Polyoxazoline sein.

Nach einer bevorzugten Ausführungsform kann c6 in Mengen von 0,01 bis 50, bevorzugt von 0,1 bis 40 Gew.-%, bezogen auf die Gesamtmenge der Komponenten A und B, eingesetzt werden.

Als weitere Komponenten, die optional zur Herstellung der teilaromatischen Polyester eingesetzt werden können, zählen Verbindungen d1, die mindestens drei zur Esterbildung befähigte Gruppen enthalten.

Die Verbindungen d1 enthalten bevorzugt drei bis zehn funktionelle Gruppen, welche zur Ausbildung von Esterbindungen fähig sind. Besonders bevorzugte Verbindungen d1 haben drei bis sechs funktionelle Gruppen dieser Art im Molekül, insbesondere drei bis sechs Hydroxylgruppen und/oder Carboxylgruppen. Beispielhaft seien genannt:
Weinsäure, Citronensäure, Äpfelsäure;
Trimethylolpropan, Trimethylolethan;
Pentaerythrit;
Polyethertriole;
Glycerin;
Trimesinsäure;
Trimellitsäure, -anhydrid;
Pyromellitsäure, -dianhydrid und
Hydroxyisophthalsäure.

Die Verbindungen d1 werden in der Regel in Mengen von 0,01 bis 5, bevorzugt 0,05 bis 4 mol%, bezogen auf die Komponente A eingesetzt.

Als Komponente d2 werden ein oder eine Mischung unterschiedlicher Isocyanate eingesetzt. So können aromatische oder aliphatische Diisocyanate eingesetzt werden. Es können aber auch höher funktionelle Isocyanate verwendet werden.

Unter einem aromatischen Diisocyanat d2 werden im Rahmen der vorliegenden Erfindung vor allem

Toluylen-2,4-diisocyanat, Toluylen-2,6-diisocyanat, 2,2'-Diphenylmethandiisocyanat, 2,4'-Diphenylmethandiisocyanat, 4,4'-Diphenylmethandiisocyanat, Naphthylen-1,5-diisocyanat oder Xylylen-diisocyanat verstanden.

Darunter werden 2,2'-, 2,4'- sowie 4,4'-Diphenylmethandiisocyanat als Komponente d2 besonders bevorzugt. Im Allgemeinen werden letztere Diisocyanate als Mischung eingesetzt.

Als dreikerniges Isocyanat d2 kommt auch Tri(4-isocyanophenyl)methan in Betracht. Die mehrkernigen aromatischen Diisocyanate fallen beispielsweise bei der Herstellung von ein-oder zweikernigen Diisocyanaten an.

In untergeordneten Mengen, z.B. bis zu 5 Gew.-%, bezogen auf das Gesamtgewicht der Komponente d2, kann die Komponente d2 auch Urethiongruppen, beispielsweise zum Verkappen der *Isocyanatgruppen*, enthalten.

Zu den bevorzugten Isocyanuraten zählen die aliphatischen Isöcyanurate, wie Isocyanurate, die sich von Alkylendiisocyanaten oder Cycloalkylendiisocyanaten mit 2 bis 20 Kohlenstoffatomen, bevorzugt 3 bis 12 Kohlenstoffatomen, z.B. Isophorondiisocyanat, ableiten. Dabei können die Alkylendiisocyanate sowohl linear als auch verzweigt sein. Besonders bevorzugt werden Diisocyanurate, die auf n-Hexamethylendiisocyanat basieren.

Im allgemeinen wird die Komponente d2 in Mengen von 0,01 bis 5, bevorzugt 0,05 bis 4 mol.-% bezogen auf die Summe der Molmengen von A und B verwendet.

Als Divinylether d3 kann man im allgemeinen alle üblichen und kommerziell erhältlichen Divinylether einsetzen. Bevorzugt verwendet werden 1,4-Butandiol-divinylether, 1,6-Hexandiol-divinylether oder 1,4-Cyclohexandimethanol-divinylether oder Mischungen davon.

Bevorzugt werden die Divinylether in Mengen von 0,01 bis 5, insbesondere von 0,2 bis 4 Gew.-%, bezogen auf das Gesamtgewicht von A und B, eingesetzt.

Beispiele bevorzugter teilaromatischer Polyester basieren auf den folgenden Komponenten
A, B, d1
A, B, d2
A, B, d1, d2
A, B, d3
A, B, c1
A, B, c1, d3
A, B, c3, c4
A, B, c3, c4, c5
A, B, d1, c3, c5
A, B, c3, d3
A, B, c3, d1
A, B, c1, c3, d3
A, B, c2

Darunter sind teilaromatische Polyester, die auf A, B, d1 oder A, B, d2 oder auf A, B, d1, d2 basieren besonders bevorzugt. Nach einer anderen bevorzugten Ausführungsform basieren die teilaromatischen Polyester auf A, B, c3, c4, c5 oder A, B, d1, c3, c5.

Die Herstellung der teilaromatischen Polyester ist an sich bekannt oder kann nach an sich bekannten Methoden erfolgen, so z.B. nach den in der WO 96/15173 angegebenen.

Die bevorzugten teilaromatischen Polyester sind charakterisiert durch ein Molekulargewicht (Mn) im Bereich von 5000 bis 50000,insbesondere im Bereich von 10000 bis 40000 g/mol, mit einer Viskositätszahl im Bereich von 50 bis 400, insbesondere im Bereich von 100 bis 300 g/ml ( gemessen in o-Dicblorbenzol/Phenol; Gew.-Verhältnis 50/50, bei einer Konzentration von 0,5 Gew.-% Polymer und einer Temperatur von 25 °C) und einem Schmelzpunkt im Bereich von 60 bis 170, bevorzugt im Bereich von 80 bis 150°C.

Erfindungsgemäß sind die Polymeren, die in den Zusammensetzungen Z als Komponente Z₁ eingesetzt werden, mit den Polymeren Q1 verträglich, die den Polymermassen Q zu Grunde liegen. Unter Verträglichkeit zweier Polymerkomponenten versteht man im Allgemeinen die Mischbarkeit der Komponenten oder die Neigung des einen Polymeren , sich in der anderen Polymerkomponente zu lösen (siehe B. Vollmert, Grundriß der makromolekulen Chemie, Band IV, S. 222ff, E. vollmert Verlag 1979) Die Verträglichkeit kann z.B. anhand der Differenz ihrer Löslichkeitsparameter, der optischen Klarheit, der Glastemperatur oder spektroskopisch z.B. anhand von NMR-, IR- oder Fluoreszenzmessungen aber auch mittels Trübungsmessungen oder Streumethoden bestimmt werden (siehe z.B. L.A. Utracki "Polymer Alloys and Blends" S. 34-42, New York 1989).

Besonders bevorzugt werden als Polymere Z₁ die gleichen Polymeren eingesetzt wie sie in den Polymermassen Q verwendet werden. Die Polymermasse Q kann dabei auf einem oder einer Mischung unterschiedlicher Polymerer Q1 basieren. Die Polymeren Q1 sind vorzugsweise die unter Z₁ genannten.

Im erfindungsgemäßen Verfahren können als Stärke solche unterschiedlichster Herkunft oder Zusammensetzung eingesetzt werden. Dabei umfaßt der Ausdruck Stärke beispielsweise Polysaccharide natürlichen, pflanzlichen Ursprungs, die hauptsächlich aus Amylose und/oder Amylopectin aufgebaut sind. Stärke kann beispielsweise aus verschiedenen Pflanzen, z.B. Kartoffeln, Reis, Tapioka, Mais, Erbsen oder Getreide wie Weizen, Hafer oder Roggen gewonnen werden. Bevorzugt werden Stärken, die aus Kartoffeln, Mais, Weizen oder Reis hergestellt werden. Mischungen von Stärken unterschiedlichen Ursprungs können ebenfalls eingesetzt werden. Zu den besonders bevorzugten Stärken zählt Kartoffelstärke. Es können aber auch thermoplastisch verarbeitbare Stärken eingesetzt werden. Hierzu zählen Stärken, die Seitenketten aufweisen, z.B. solche, die über Ether- oder Estergruppen an die Stärke gebunden sind.

Besonders bevorzugt wird Stärke in Pulverform eingesetzt. Geeignet sind z.B. Pulver mit Schüttgewichten im Bereich von 300 bis 900 kg/m³. Bevorzugt werden Pulver mit Schüttgewichten im Bereich von 600 bis 800 kg/m³. Im Allgemeinen enthält das Pulver von 2 bis 20 Gew.-%, bezogen auf das Pulver, Wasser.

Als Cellulose kann solche unterschiedlichsten Ursprungs eingesetzt werden, beispielsweise kann Cellulose aus nicht ligninhaltigen Quellen wie Baumwolle oder aus ligninhaltigen Quellen wie Holz verwendet werden, wobei die eingesetzte Cellulose z.B. Holzcellulose von Lignin weitgehend befreit sein sollte.

Es können auch Cellulosen im erfindungsgemäßen Verfahren verwendet werden, die modifiziert sind. Hierunter werden Celluloseester oder Celluloseether verstanden. Darunter werden solche mit einem Substitutionsgrad von bis zu 2,5 bevorzugt. Bevorzugte Substituentenreste sind Alkanoylrest mit von 2 bis 10 Kohlenstoffatomen. Beispiele für bevorzugt Celluloseester sind Celluloseacetate, Celluloseprorionate, Cellulosebuyrate, Celluloseacetatproprionate oder Celluloseacetatbutyrate.

Bevorzugt wird die Cellulose in Form von feinen Fasern eingesetzt. Im Allgemeinen enthalten die Fasern geringe Mengen Wasser, typischerweise im Bereich von 2 bis 12 Gew.-%, bevorzugt von 2 bis 5 Gew.-% bezogen auf die Fasern.

Es ist auch möglich eine Mischung unterschiedlicher Stärken oder unterschiedlicher Cellulosen oder Mischungen aus einer oder mehreren Stärken und einer oder mehreren Cellulosen im erfindungsgemäßen Verfahren einzusetzen.

Als Komponente Z₃ enthalten die Zusammensetzungen Z Bienenwachs oder Montanesterwachs. Erfindungsgemäß kann die Komponente Z₃ auch eine Mischung aus Bienenwachs und Montanesterwachs sein. Nach einer bevorzugten Ausführungsform ist Z₃ Bienenwachs. Das Bienenwachs kann geringe Mengen weiterer Wachse als Verunreinigung enthalten. Bevorzugt wird jedoch Bienenwachs als Z₃ eingesetzt das im wesentlichen frei von anderen Wachsen ist. Als Z₃ können Bienenwachse unterschiedlicher Provinienz und damit unterschiedlicher Zusammensetzung verwendet werden. Montanesterwachse unterschiedlicher Zusammensetzungen können ebenfalls eingesetzt werden. Typischerweise weisen die Bienenwachse bzw. Montaneserwachse einen Tropfpunkt im Bereich von 60-85°C, bevorzugt von 60-65°C, eine Säurezahl im Bereich von 15-22 und eine Verseifungszahl im Bereich von 85 bis 158, bevorzugt von 85-105 auf. Das Bienenwachs kann in unterschiedlicher Form, beispielsweise als Schmelze oder teilchenförmig eingesetzt werden. In der Regel wird das Bienenwachs in Form von Pastillen im erfindungsgemäßen Verfahren eingesetzt.

Die Herstellung der Zusammensetzung Z kann durch Vermischen und/ oder Homogenisieren der Bestandteile, vorzugsweise bei Temperaturen in einem Bereich bei dem die Polymeren Z₁ geschmolzen vorliegen, z.B. im Bereich von 220 bis 260°C in Mischvorrichtungen aller Art, z.B. Knetern wie Haake-Knetern, Mischern wie Taumelmischer oder Banbury-Mischern oder Extrudern wie Einschneckenextrudern, bevorzugt Zweischneckenextrudern erfolgen. Die Reihenfolge der Zugabe der Komponenten kann variiert werden, wobei zwei Komponenten vorgemischt werden können oder auch alle drei Komponenten gemeinsam gemischt werden können. Allerdings ist es bevorzugt, die Polymerkomponente Z₁ vorzulegen, zu schmelzen und anschließend den Phasenvermittler Z₂ und das Bienenwachs Z₃ zuzugeben. Dabei ist es besonders bevorzugt eine Mischung aus Z₂ und Z₃ zuzugeben.

Darüber hinaus können die Zusammensetzungen noch Additive Z₄ wie Fettsäureamide insbesondere Erucasäureamid, Mono-, Di- oder Triglyceride von Fettsäuren, insbesondere Glycerinmonostearat oder Glycerintristearat, Talkum, Neutralisationsmittel, Stabilisatoren oder Farbstoffe enthalten, wobei als Stabilisatoren z.B. Tocopherol (Vitamin E), organische Phosphorverbindungen, Mono-, Di- oder Polyphenole, Hydrochinone, Diarylamine oder Thioether in Betracht kommen. Beispiele für Farbstoffe, die zugesetzt werden können, sind z.B. UV-Stabilisatoren, Pigmente, Ruß oder Fluoreszenzfarbstoffe. Unter den Fluoreszenzfarbstoffen werden optische Aufheller, die frei sind von ionischen Gruppen und aus der Klasse der Bisstyrylbenzole, Stilbene, Benzoxyzole, Cumarine oder Pyrene stammen, insbesondere der aus der Klasse der Cyanostyrylverbindungen, besonders bevorzugt. In einer bevorzugten Ausführungsform enthalten die Zusammensetzungen Z als Additiv Z₄ Glycerinmonostearat. Die Reihenfolge der Zugabe dieser weiteren Additive kann variiert werden. So können die Additive beispielsweise zusammen mit einer der Komponenten von Z vorgemischt werden, sie können aber auch teilweise vorgemischt, teilweise oder insgesamt später zugefügt werden.

Die Zusammensetzungen Z können den Polymermassen Q als Vormischung (Masterbatch) in den Mengen zugegeben werden oder umgekehrt, die benötigt werden, um die gewünschte Endkonzentration an Bienenwachs und falls vorhanden an den anderen Additiven zu erreichen. Dabei können die Polymermassen Q selbst Zusatzstoffe wie die genannten Stabilisatoren oder Farbstoffe aber auch Füllstoffe oder Verstärkungsmittel enthalten, oder es können ihnen diese nach Zugabe von Z zugesetzt werden. Als Füllstoffe oder Verstärkungsmittel, die in Q enthalten sein oder diesen auch nach Zugabe von Z zugesetzt werden können, kommen in biologisch abbaubaren Polymermassen Stärke oder Cellulose wie Cellulosefasern, Sisal oder Hanf in Betracht. Weitere geeignete Zusatzstoffe sind z.B. Calciumcarbonat, Calciumsulfat oder Talkum, als Nukleierungsmittel.

Die nach dem erfindungsgemäßen Verfahren hergestellten Polymermassen Q enthalten in einer der bevorzugten Ausführungsformen von 0,1 bis 2, bevorzugt 0,1 bis 1 Gew.-% Bienenwachs oder Montanesterwachs oder deren Mischungen, bezogen auf das Gesamtgewicht der Polymermassen, sowie von 0,1 bis 50, bevorzugt 1 bis 20 Gew.-% Zusatzstoffe wie Additive, Füll- oder Verstärkungsstoffe oder Mischungen daraus.

Das Erfindungsgemäße Verfahren hat den Vorteil, daß Folien oder Beschichtungen mit reduzierter Wasserpermeabilität erhalten werden. Außerdem weisen die Folienoberflächen eine angenehme Haptik auf. Das erfindungsgemäße Verfahren hat zudem den Vorteil, daß sich der Fördergrad der Polymermassen, d.h. der Durchsatz pro Umdrehung der Extruderschnecke pro Minute erhöht, beispielsweise im 5 bis 15 %, gegenüber Polymermassen, die nicht nach dem erfindungsgemäßen Verfahren hergestellt wurden.

### Beispiele

### Meßmethoden:

Der Schmelzvolumenindex (MVI) [cm³/10'] wurde gemäß DIN 53735 oder ISO 1133 bei einer Temperatur von 190°C und einer Belastung von 2,16 kg bestimmt.

Die Reißfestigkeit [N/mm²] (jeweils paralell und senkrecht) wurde mit ausgestanzten, hantelförmigen Probekörpern S3A nach DIN 53504 gemessen. (50 mm Länge, 8,5 mm maximaler Breite im oberen Bereich und 4 mm Prüfbreite). Der Klemmenabstand betrug bei Versuchsbeginn 25 mm. Die Probekörper wurden mit 100 mm/min gezogen.

Die Wasserdampfpermeabilität WDD [g·100 µm·m⁻²·d⁻¹] wurde mit einer Trägergasmethode nach ASTM F 1249 gemessen (Prüfgerät: Mocon Permatran W 600). Dabei transferiert ein Trägergas (trockener Stickstoff) die durch die Folie diffundierten Wasserdampfmoleküle zu einem Infrarotdetektor, der die Quantifizierung des Wasserdampfstromes vornimmt. Der Wasserdampfstrom wird zur Bestimmun der Wasserdampfpermeabilität bezogen auf eine Dicke von 100 µm herangezogen.

Der Tropfpunkt [°C] wurde bestimmt nach Ubbelohe gemäß DIN 51801.

Die Säurezahl [mg KOH/g] wurde gemessen nach DIN 53402.

Die Verseifungszahl [mg KOH/g] wurde nach DIN 53401 gemessen.

### Materialien:

Als Polymere Z₁₁ bis Z₁₃ wurden Polyester, aufgebaut aus 1,4-Butandiol, Adipinsäure und Terephthalsäure (Molverhältnis: 100:45:55) und 0,1 Gew.-%, bezogen auf das Gesamtgewicht aller eingesetzten Monomeren, Glycerin und 0,5 Gew.-%, bezogen auf das Gesamtgewicht aller eingesetzten Monomeren, Hexamethylendiisocyanat und charakterisiert durch einen Schmelzvolumenindex (MVI) von Z₁₁:5 cm³/10', Z₁₂:7 cm³/10' und Z₁₃:15 cm³/10' eingesetzt.

Als Polymer Q1₁ wurde das Polymer Z₁₁ verwendet.

Als Phasenvermittler wurde Kartoffelstärke in Pulverform (weiß) (Z₂₁) oder Cellulose in Form feiner Fasern (Z₂₂) (Mikrofasern mit einem Celluloseanteil von 99,5 % Cellulose und einem Siebrückstand >71 µm: 0,1 %, > 32 µm: 3 %) verwendet. Zum Vergleich wurde Polycaprolacton auf einem MVI von 25 cm³/10' (ZV₂₁) bzw. Talkum in Pulverform (ZV₂₂) eingesetzt.

Als Komponente Z₃₁ wurde Bienenwachs in Form von Pastillen verwendet. Das Bienenwachs hatte einen Tropfpunkt von 63°C, eine Säurezahl von 19,3, eine Esterzahl von 75,3 und eine Verseifungszahl von 94,6.

### Herstellung von Zusammensetzungen Z

### Beispiele 1 bis 5:

In einem Haake-Kneter wurde der Polyester bei einer Temperatur von 150 °C zehn Minuten temperiert und das sich einstellende Drehmoment bestimmt. Anschließend wurde das mit Phasenvermittler gemischte Wachs zugegeben und das sich einstellende Drehmoment nach 3 Minuten bestimmt. Dabei ist das Drehmoment ein Maß für den Einbau des Wachses in die Polymermatrix. Ein Abfall des Drehmomentes ist auf die Außenschmierung durch das Wachs zurückzuführen. Die Ergebnisse sind der Tabelle 1 zu entnehmen.

### Vergleichsversuche V1 und V2

Die unter 1 bis 5 beschriebenen Versuche wurden wiederholt, jedoch ohne Phasenvermittler durchgeführt. Die so erhaltenen Granulate fühlten sich gewachst an. Das Kühlwasser enthielt größere Mengen Wachs.

**Tabelle 1:**

| Herstellung von Zusammensetzungen Z | | | | | |
|---|---|---|---|---|---|
| Bspl. Nr | Phasenvermittler | | Wachs | Drehmoment | |
| | Art | Menge [Gew.-%] | [Gew.-%] | Polyester vor Zugabe | Nach zugabe |
| V1 | - | - | 5 | 640 | 5 |
| V2 | - | - | 10 | 620 | 5 |
| 1 | Z₂₁ | 5 | 10 | 600 | 520 |
| 2 | Z₂₁ | 10 | 15 | 770 | 440 |
| 3 | Z₂₂ | 5 | 5 | 670 | 590 |
| 4 | Z₂₂ | 10 | 10 | 680 | 450 |
| 5 | Z₂₂ | 15 | 15 | 670 | 390 |

### Beispiele 6 bis 13

Der Phasenvermittler Z₂₁ bzw. Z₂₂ wurde mit dem Bienenwachs Z₃₁ bei 80°C vorgemischt und zu dem Polyester Z₁₁ bzw. Z₁₂ zugegeben. Die Verarbeitung erfolgte im Extruder (ZSK Doppelschneckenextruder der Firma Werner & Pfleider) bei den in der Tabelle 2 angegebenen Bedingungen verarbeitet. Anschließend wurde die Zusammensetzung in einem Wasserbad abgekühlt und granuliert.

### Vergleichsversuche V3 bis V7

Das Bienenwachs Z₃₁ wurde unter den in Tabelle 3 angegebenen Bedingungen im Extruder (ZSK Doppelschneckenextruder der Firma Werner & Pfleider) mit den Polyestern Z₁₁ bzw. Z₁₃ gemischt. Anschließend wurden die Zusammensetzungen in einem Wasserbad abgekühlt und granuliert.

### Vergleichsversuche V8 bis V11

Die Versuche 6 bis 13 wurden wiederholt, jedoch anstelle des Phasenvermittlers Z₂₁ bzw. Z₂₂ wurden Polycaprolacton ZV₂₁ bzw. Talkum ZV₂₂ eingesetzt. Die Versuchsbedingungen und Ergebnisse sind Tabelle 3 zu entnehmen.

**Tabelle 2:**

| Herstellung von erfindungsgemäßen Zusammensetzungen Z | | | | | | | | | |
|---|---|---|---|---|---|---|---|---|---|
| Zusammensetzung: | 6 | 7 | 8 | 9 | 10 | 11 | 12 | 13 | 14 |
| Polyester | Z₁₁ | Z₁₁ | Z₁₁ | Z₁₁ | Z₁₂ | Z₁₂ | Z₁₂ | Z₁₂ | |
| Z₂₁[%] | 5 | 10 | - | - | 2,5 | 5 | 10 | 20 | 1 |
| Z₂₂[%] | - | - | 5 | 10 | - | - | - | - | |
| ZV₂₁[%] | - | - | - | - | - | - | - | - | |
| ZV₂₂[%] | - | - | - | - | - | - | - | - | |
| Z₃₁[%] | 10 | 10 | 10 | 10 | 10 | 10 | 10 | 10 | 5 |

| Bedingungen: | | | | | | | | | |
|---|---|---|---|---|---|---|---|---|---|
| Extruder ZSK | 30 | 30 | 30 | 30 | 30 | 30 | 30 | 30 | |
| Verarbeitungstemperatur [°C] | 130 | 130 | 130 | 130 | 130 | 130 | 130 | 130 | |
| Drehzahl [min⁻¹] | 200 | 200 | 200 | 200 | 200 | 200 | 200 | 200 | |
| Durchsatz[kg/h] | 10 | 10 | 10 | 10 | 5 | 5 | 5 | 5 | |
| Bemerkung | c | c | c | c | c | c | c | c | |
| a) Wachs im Wasserbad b) Granulatoberfläche stark gewachst c) weder a) noch b) | | | | | | | | | |

**Tabelle 3:**

| Herstellung von Zusammensetzungen zum Vergleich | | | | | | | | | |
|---|---|---|---|---|---|---|---|---|---|
| Zusammensetzung | V3 | V4 | V5 | V6 | V7 | V8 | V9 | V10 | V11 |
| Polyester | Z₁₁ | Z₁₁ | Z₁₃ | Z₁₁ | Z₁₁ | Z₁₁ | Z₁₁ | Z₁₁ | Z₁₁ |
| Z₂₁ [%] | - | - | - | - | - | - | - | - | - |
| Z₂₂ [%] | - | - | - | - | - | - | - | - | - |
| ZV₂₁[%] | - | - | - | - | - | 5 | 10 | - | - |
| ZV₂₂[%] | - | - | - | - | - | - | - | 5 | 10 |
| Z₃₁[%] | 5 | 5 | 5 | 5 | 11 | 10 | 10 | 10 | 10 |

| Bedingungen: | | | | | | | | | |
|---|---|---|---|---|---|---|---|---|---|
| Extruder ZSK | 25 | 40 | 40 | 30 | 30 | 30 | 30 | 30 | 30 |
| Verarbeitungstemperatur [°C] | 130 | 130 | 130 | 130 | 130 | 130 | 130 | 130 | 130 |
| Drehzahl [min⁻¹] | 100 | 100 | 100 | 400 | 400 | 200 | 200 | 200 | 200 |
| Durchsatz [kg/h] | 5 | 5 | 5 | 10 | 10 | 10 | 10 | 10 | 10 |
| Bemerkung | a,b | a,b | a,b | a,b | a,b | a,b | a,b | a,b | a,b |
| a) Wachs im Wasserbad b) Granulatoberfläche stark gewachst c) weder a) noch b) | | | | | | | | | |

### Herstellung der Polymermassen Q und Folien daraus

### Beispiele 15 bis 19

Die Zusammensetzungen der Beispiele 10 bis 14 wurden in einem Extruder der Firma Windmöller & Hölscher mit einem Schneckendurchmesser von 60 mm bei einer Temperatur von ca 160°C mit dem Polymeren Q1₁ zu Polymermassen verarbeitet. Die Polymermassen der Beispiele 14 bis 17 wurden mit jeweils 0,6 Gew.-% Feintalkum und 0,2 Gew.-% Eurucasäureamid, bezogen auf die Polymermassen, versetzt. Die Polymermasse 18 wurde mit 0,2 Gew.-% Eurucasäureamid, bezogen auf die Polymermasse, versetzt. Aus den Polymermassen wurden unter den in Tabelle 4 angegebenen Bedingungen Schlauchfolien hergestellt, die zu Flachfolien geschnitten wurden.

### Vergleichsbeispiel V12

Das Beispiel 18 wurde wiederholt, jedoch wurde nur das Polymer Q1₁ (mit 0,2 Gew.-% Erucasäureamid) verwendet.

Die erfindungsgemäßen Folien weisen gute Reißfestigkeiten auch im Vergleich zu Bienenwachs freien Folien auf. Die erfindungsgemäßen Folien hatten selbst bei einem Gehalt von nur 0,2 Gew.-% Bienenwachs eine um 55 % reduzierte Wasserdampfpermeabilität.

Der Fördergrad war um 9 % gegenüber V12 gesteigert.

**Tabelle 4:**

| Herstellung von Polymermassen und Folien | | | | | | |
|---|---|---|---|---|---|---|
| Polymermasse: | 15 | 16 | 17 | 18 | 19 | V 12 |
| Zusammensetzung Nr. | 10 | 11 | 13 | 13 | 14 | - |
| Zusammensetzung [Gew.-%] | 2 | 2 | 2 | 2 | 2 | 0 |
| Q1₁ [Gew %] | 98 | 98 | 98 | 98 | 98 | 100 |
| Folienherstellung: | | | | | | |
| Abzugsgeschwindigkeit [m/min] | 17,2 | 17,2 | 17,2 | 17,1 | 9,0 | 9,0 |
| Aufblasverhalten | 3,6 | 3,6 | 3,6 | 3,6 | 3,0 | 3,0 |
| Gleitvermögen | gut | gut | gut | gut | gut | gut |
| σ_{II} [N/mm²] | 33,2 | 32,7 | 29,9 | 29,1 | 28,5 | 33,1 |
| σ_{⊥}[N/mm²] | 40,9 | 39,6 | 35,7 | 31,4 | 33,1 | 37,5 |
| Foliendicke [µm] | 20 | 20 | 21 | 20 | 47 | 49 |
| WDD [g·100 µm·m⁻²·d⁻¹] | n.g. | n.g. | n.g. | n.g. | 35 | 78 |
| Haptik | a | a | a | a | a | ??? |
| n.g.: nicht gemessen, a: angenehm | | | | | | |

## Patentansprüche

1. Verfahren zur Reduktion der Wasserdampfpermeabilität von Folien oder Beschichtungen aus Bienenwachs oder Montanesterwachs oder deren Mischungen enthaltenden Polymermassen (Q), **dadurch gekennzeichnet, daß** man in einem ersten Schritt eine Zusammensetzung (Z), enthaltend Z₁) 40 bis 98,5 Gew.-% mindestens ein mit den Q zu Grunde liegenden Polymeren (Q1) verträglichen Polymeren, Z₂) 0,5 bis 20 Gew.-% Stärke oder Cellulose oder deren Mischungen als Phasenvermittler, Z₃) 1 bis 20 Gew.-% Bienenwachs oder Montanesterwachs oder deren Mischungen und Z₄ 0 bis 20 Gew.-% mindestens einen Additives, wobei die Gewichtsprozente sich auf das Gesamtgewicht von Z beziehen, herstellt und in einem zweiten Schritt die Zusammensetzung Z mit dem Q zu Grunde liegenden Polymeren vereinigt.

2. Verfahren nach Anspruch 1, **dadurch gekennzeichnet, daß** Z durch Mischen von Z₂ mit Z₃ und Vereinigung dieser Mischung mit Z₁ hergestellt wird.

3. Verfahren nach den Ansprüchen 1 oder 2, **dadurch gekennzeichnet, daß** man von 1 bis 15 Gew.-%, bezogen auf das Gesamtgewicht von Z des Phasenvermittlers Z₂ einsetzt.

4. Folien oder Beschichtungen, erhältlich aus Bienenwachs oder Montanesterwachs oder deren Mischungen enthaltenden Polymermassen (Q) durch Vereinigung einer Zusammensetzung (Z), enthaltend Z₁) 40 bis 98,5 Gew.-% mindestens ein mit den Q zu Grunde liegenden Polymeren (Q₁) verträglichen Polymeren, Z₂) 0,5 bis 20 Gew.-% Stärke oder Cellulose oder deren Mischungen als Phasenvermittler, Z₃) 1 bis 20 Gew.-% Bienenwachs oder Montanesterwachs oder deren Mischungen und Z₄)
0 bis 20 Gew.-% mindestens eines Additives, wobei die *Ge*wichtsprozente sich auf das Gesamtgewicht von Z beziehen, mit dem Q zu Grunde liegenden Polymeren.

5. Folien oder Beschichtungen nach Anspruch 4 mit einer Wasserdampfpermeabilität von 16 bis 57 [g· 100 µm m⁻²d⁻¹ gemessen nach ASTM F 1249.

6. Zusammensetzungen, enthaltend
Z₁) 40 bis 98,5 Gew.-% mindestens eines teilaromatischen Polyesters,
Z₂) 0,5 bis 20 Gew.-% Stärke oder Cellulose oder deren Mischungen
Z₃) 1 bis 20 Gew.-% Bienenwachs oder Montanesterwachs oder deren Mischungen und
Z₄) 0 bis 20 Gew.-% mindestens eines Additives.

7. Zusammensetzungen nach Anspruch 6, worin als Komponente Z₁ Polyester verwendet werden, enthaltend als wesentliche Komponenten
A) eine Säurekomponente aus
a1) 30 bis 95 mol-% mindestens einer aliphatischen oder mindestens einer cycloaliphatischen Dicarbonsäure oder deren esterbildende Derivate oder Mischungen davon
a2) 5 bis 70 mol% mindestens einer aromatischen Dicarbonsäure oder deren esterbildendem Derivat oder Mischungen davon und
a3) 0 bis 5 mol% einer sulfonatgruppenhaltigen Verbindung,
B) eine Diolkomponente ausgewählt aus mindestens einem C₂-bis C₁₂-Alkandiol und mindestens einem C₅- bis C₁₀-Cycloalkandiol oder Mischungen davon
und gewünschtenfalls darüber hinaus eine oder mehrere Komponenten ausgewählt aus
C) einer Komponente ausgewählt aus
c1) mindestens einer Etherfunktionen enthaltenden Dihydroxyverbindung der Formel I
HO-[(CH₂)ₙ-O]ₘ-H (I)
in der n für 2, 3 oder 4 und m für eine ganze Zahl von 2 bis 250 stehen
c2) mindestens einer Hydroxycarbonsäure der Formel IIa oder IIb 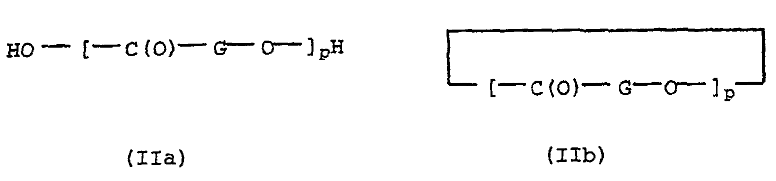 in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
c4) mindestens einem Diamino-C₁-bis C₈-Alkan
c5) mindestens einem 2,2'-Bisoxazolins der allgemeinen Formel III 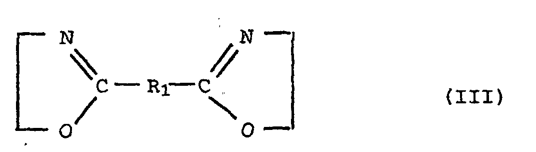 wobei R¹ eine Einfachbindung, eine (CH₂)_{z}-Alkylengruppe, mit z = 2, 3 oder 4, oder eine Phenylengruppe bedeutet
c6) mindestens einer Aminocarbonsäure ausgewählt aus der Gruppe, bestehend aus den natürlichen Aminosäuren, Polyamiden mit einem Molekulargewicht von höchstens 18000g/mol, erhältlich durhc Polykondensation einer Dicarbonsäure mit 4 bis 6 C-Atomen und einem Diamin mit 4 bis 10 C-Atomen, Verbindungen der Formeln IV a und IVb 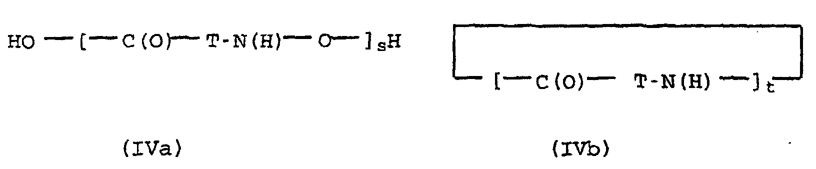 in der s eine ganze Zahl von 1 bis 1500 und t eine ganze Zahl von 1 bis 4 bedeuten, und T für einen Rest steht, der ausgewählt ist aus der Gruppe bestehend aus Phenylen, -(CH₂)ₙ-, wobei n eine ganze Zahl von 1 bis 12 bedeutet, -C(R2)H- und -C(R²)HCH₂, wobei R² für Methyl oder Ethyl steht,
und Polyoxazolinen mit der wiederkehrenden Einheit V 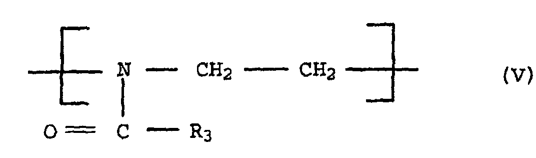
in der R³ für Wasserstoff, C₁-C₆-Alkyl, C₅-C₈-Cycloalkyl, unsubstituierten oder mit C₁-C₄-Alkylgruppen bis zu dreifach substituiertes Phenyl oder für Tetrahydrofuryl steht,
oder Mischungen aus c1 bis c6
und
D) einer Komponente ausgewählt aus
d1) mindestens einer Verbindung mit mindestens drei zur Esterbildung befähigten Gruppen,
d2) mindestens eines Isocyantes
d3) mindestens eines Divinylethers
oder Mischungen aus d1) bis d3).

8. Verwendung der Zusammensetzungen gemäß den Ansprüchen 6 bis 7 zur Herstellung von Vormischungen.

9. Verwendung der Zusammensetzungen gemäß den Ansprüchen 6 bis 7 zur Reduktion der Wasserdampfpermeabilität von Folien oder Beschichtungen.

10. Verwendung von Stärke, Cellulose oder deren Mischungen als Phasenvermittler bei der Herstellung Bienenwachs oder Montanesterwachs oder deren Mischungen enthaltender Polymermassen.

## Claims

1. A process for reducing the water-vapor permeability of films or coatings made from polymer compositions (Q) comprising beeswax or comprising montan ester wax or comprising mixtures of these, which comprises in a first step preparing a composition (Z) comprising Z₁) from 40 to 98.5% by weight of at least one polymer compatible with the polymers (Q1) which are the basis of Q, Z₂) from 0.5 to 20% by weight of starch or cellulose or a mixture of these as compatibilizer, Z₃) from 1 to 20% by weight of beeswax or montan ester wax or a mixture of these, and Z₄) from 0 to 20% by weight of at least one additive, where the percentages by weight are based on the total weight of Z, and in a second step combining the composition Z with the polymer which is the basis of Q.

2. A process as claimed in claim 1, wherein Z is prepared by mixing Z₂ with Z₃ and combining this mixture with Z₁.

3. A process as claimed in claim 1 or 2, wherein use is made of from 1 to 15% by weight of the compatibilizer Z₂, based on the total weight of Z.

4. A film or a coating obtainable from polymer compositions (Q) comprising beeswax or comprising montan ester wax or comprising mixtures of these, by combining a composition (Z) comprising Z₁) from 40 to 98.5% by weight of at least one polymer compatible with the polymers (Q1) which are the basis of Q, Z₂) from 0.5 to 20% by weight of starch or cellulose or a mixture of these as compatibilizer, Z₃) from 1 to 20% by weight of beeswax or montan ester wax or mixtures of these, and Z₄) from 0 to 20% by weight of at least one additive, where the percentages by weight are based on the total weight of Z, with the polymer which is the basis of Q.

5. A film or a coating as claimed in claim 4 with a water-vapor permeability of from 16 to 57 [g· 100 µm m⁻²d⁻¹ measured to ASTM F 1249].

6. A composition comprising
Z₁) from 40 to 98.5% by weight of at least one partly aromatic polyester,
Z₂) from 0.5 to 20% by weight of starch or cellulose or a mixture of these,
Z₃) from 1 to 20% by weight of beeswax or a montan ester wax or a mixture of these, and
Z₄) from 0 to 20% by weight of at least one additive.

7. A composition as claimed in claim 6, where polyesters used as component Z₁ contain, as substantive components,
A) an acid component made from
a1) from 30 to 95 mol% of at least one aliphatic or at least one cycloaliphatic dicarboxylic acid or ester-forming derivatives thereof or a mixture of these,
a2) from 5 to 70 mol% of at least one aromatic dicarboxylic acid or an ester-forming derivative thereof or a mixture of these, and
a3) from 0 to 5 mol% of a compound containing sulfonate groups, and
B) at least one diol component selected from the group consisting of C₂-C₁₂ alkanediols or of C₅-C₁₀ cycloalkanediols, or of mixtures of these,
and, if desired, also one or more components selected from the group consisting of
C) a component selected from the group consisting of
c1) at least one dihydroxy compound containing ether functions and having the formula I
HO-[(CH₂)ₙ-O]ₘ-H (I)
where n is 2, 3 or 4 and m is an integer from 2 to 250,
c2) at least one hydroxycarboxylic acid of formula IIa or IIb 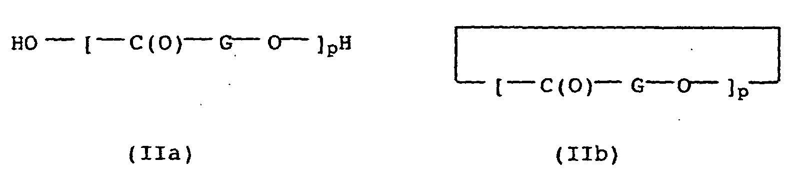 where p is an integer from 1 to 1500 and r is an integer from 1 to 4, and G is a radical selected from the group consisting of phenylene, -(CH₂)_{q}-, where q is an integer from 1 to 5, -C(R)H- and -C(R)HCH₂, where R is methyl or ethyl,
c4) at least one diamino-C₁-C₈ alkane,
c5) at least one 2,2'-bisoxazoline of the formula III 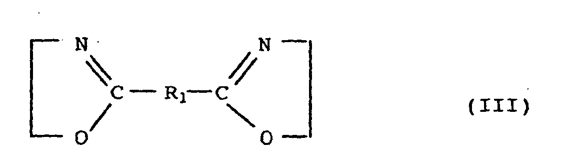 where R¹ is a single bond, (CH₂)_{z} alkylene, where z = 2, 3 or 4, or phenylene, and
c6) at least one aminocarboxylic acid selected from the group consisting of the naturally occuring amino acids, polyamides with a molar mass of not more than 18,000 g/mol obtainable by polycondensing a dicarboxylic acid having from 4 to 6 carbon atoms with a diamine having from 4 to 10 carbon atoms, compounds of the formulae IVa and IVb 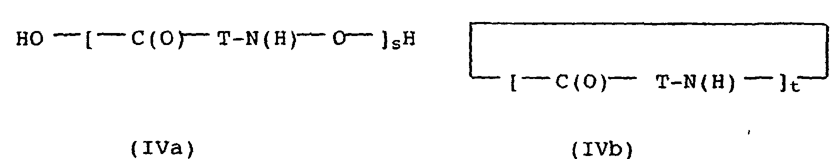 where s is an integer from 1 to 1500 and t is an integer from 1 to 4, and T is a radical selected from the group consisting of phenylene, -(CH₂)ₙ-, where n is an integer from 1 to 12, -C(R²)H- and -C(R²)HCH₂, where R² is methyl or ethyl,
and polyoxazolines having the repeat unit V 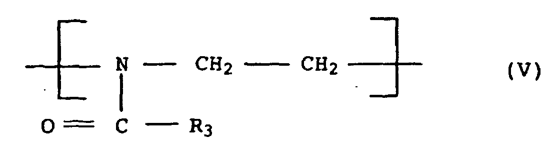
where R³ is hydrogen, C₁-C₆-alkyl, C₅-C₈-cycloalkyl, phenyl, either unsubstituted or with up to three C₁-C₄-alkyl substituents, or tetrahydrofuryl,
or a mixture made from c1 to c6,
and of
D) a component selected from the group consisting of
d1) at least one compound having at least three groups capable of ester formation,
d2) at least one isocyanate, and
d3) at least one divinyl ether,
or a mixture made from d1) to d3).

8. The use of the compositions as claimed in claim 6 or 7 for preparing premixes.

9. The use of the compositions as claimed in claim 6 or 7 for reducing the water-vapor permeability of films or coatings.

10. The use of starch, cellulose or mixtures of these as a compatibilizer in preparing polymer compositions comprising beeswax or comprising montan ester wax or comprising mixtures of these.

## Revendications

1. Procédé de réduction de la perméabilité à la vapeur d'eau de feuilles ou de revêtements à base de masses polymères (Q) contenant de la cire d'abeille ou de la cire d'ester montanique ou leurs mélanges, **caractérisé en ce que**, dans une première étape, on prépare une composition (Z), contenant Z₁) 40 à 98,5% en poids d'au moins un polymère compatible avec le polymère (Q1) qui est à la base de Q, Z₂) 0,5 à 20% en poids d'amidon ou de cellulose ou de leurs mélanges, comme intermédiaire de phases, Z₃) 1 à 20% en poids de cire d'abeille ou de cire d'ester montanique ou de leurs mélanges et Z₄) 0 à 20% en poids d'au moins un additif, les % en poids se rapportant au poids total de Z, et, dans une deuxième étape, on réunit la composition Z avec le polymère qui est à la base de Q.

2. Procédé suivant la revendication 1, **caractérisé en ce que** Z est préparé par mélange de Z₂ avec Z₃ et réunion de ce mélange avec Z₁.

3. Procédé suivant l'une des revendications 1 et 2, **caractérisé en ce qu'**on met en oeuvre de 1 à 15% en poids, par rapport au poids total de Z, de l'intermédiaire de phases Z₂.

4. Feuilles ou revêtements que l'on peut obtenir à partir de masses polymères (Q) contenant de la cire d'abeille ou de la cire d'ester montanique ou leurs mélanges, par réunion d'une composition (Z), contenant Z₁) 40 à 98,5% en poids d'au moins un polymère compatible avec le polymère (Q1) qui est à la base de Q, Z₂) 0,5 à 20% en poids d'amidon ou de cellulose ou de leurs mélanges, comme intermédiaire de phases, Z₃) 1 à 20% en poids de cire d'abeille ou de cire d'ester montanique ou de leurs mélanges et Z₄) 0 à 20% en poids d'au moins un additif, les % en poids se rapportant au poids total de Z, et du polymère qui est à la base de Q.

5. Feuilles ou revêtements suivant la revendication 4, présentant une perméabilité à la vapeur d'eau de 16 à 57 g.100 µm.m⁻².d⁻¹, mesurée selon la norme ASTM F 1249.

6. Compositions, contenant
Z₁) 40 à 98,5% en poids d'au moins un polyester partiellement aromatique,
Z₂) 0,5 à 20% en poids d'amidon ou de cellulose ou de leurs mélanges,
Z₃) 1 à 20% en poids de cire d'abeille ou de cire d'ester montanique ou de leurs mélanges, et
Z₄) 0 à 20% en poids d'au moins un additif.

7. Compositions suivant la revendication 6, dans lesquelles, comme composant Z₁, on utilise du polyester contenant, comme composants essentiels,
A) un composant acide à base de
a1) 30 à 95 moles % d'au moins un acide dicarboxylique aliphatique ou cycloaliphatique ou de leurs dérivés générateurs d'ester ou de leurs mélanges,
a2) 5 à 70 moles % d'au moins un acide dicarboxylique aromatique ou de ses dérivés générateurs d'essai ou de leurs mélanges, et
a3) 0 à 5 moles % d'un composé contenant des groupes sulfonate,
B) un composant diol choisi parmi au moins un alcanediol en C₂-C₁₂ et au moins un cycloalcanediol en C₅-C₁₀, et leurs mélanges,
et éventuellement en outre un ou plusieurs composants choisis parmi
C) un composant choisi parmi
c1) au moins un composé dihydroxy contenant des fonctions éther et répondant à la formule I :
HO-[(CH₂)ₙ-O]ₘ-H (I)
dans laquelle n vaut 2, 3 ou 4 et m un nombre entier de 2 à 250,
c2) au moins un acide hydroxycarboxylique de la formule IIa ou IIb : 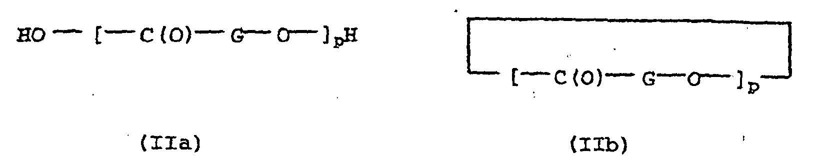 dans lesquelles p est un nombre entier de 1 à 1500 et r un nombre entier de 1 à 4, et G représente un radical qui est choisi parmi le groupe constitué du phénylène, de -(CH₂)_{q}-, où q représente un nombre entier de 1 à 5, de -C(R)H- et de -C(R)HCH₂, où R représente du méthyle ou de l'éthyle,
c4) au moins un diamino-alcane en C₁-C₈,
c5) au moins une 2,2'-bisoxazoline de la formule générale III : 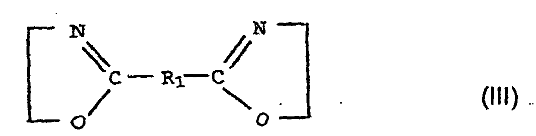 dans laquelle R¹ représente une simple liaison, un groupe alkylène (CH₂)_{z}, où z = 2, 3 ou 4, ou un groupe phénylène,
c6) au moins un acide aminocarboxylique choisi parmi le groupe constitué des acides aminés naturels, des polyamides ayant un poids moléculaire au maximum de 18000 g/mole, que l'on peut obtenir par polycondensation d'un acide dicarboxylique comportant 4 à 6 atomes de C et d'une diamine comportant 4 à 10 atomes de C, des composés des formules IVa et IVb: 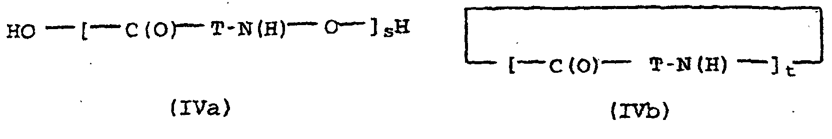 dans lesquelles s représente un nombre entier de 1 à 1500 et t un nombre entier de 1 à 4, et T représente un radical qui est choisi parmi le groupe constitué du phénylène, de -(CH₂)ₙ-, où n représente un nombre entier de 1 à 12, de -C(R²)H- et de -C(R²)HCH₂, où R² représente du méthyle ou de l'éthyle, et des polyoxazolines comportant l'unité répétitive V: 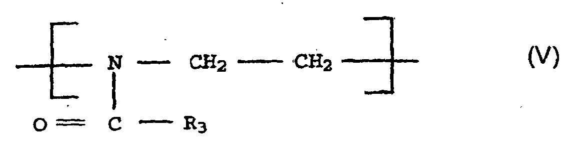 dans laquelle R³ représente de l'hydrogène, un alkyle en C₁-C₆, un cycloalkyle en C₅-C₈, du phényle non substitué ou substitué jusqu'à trois reprises avec des groupes alkyle en C₁-C₄, ou du tétrahydrofuryle,
ou des mélanges de c1 à c6, et
D) un composant choisi parmi
d1) au moins un composé comportant au moins trois groupes susceptibles de former des esters,
d2) au moins un isocyanate,
d3) au moins un éther divinylique,
ou des mélanges de d1) à d3).

8. Utilisation des compositions suivant l'une des revendications 6 et 7, pour la fabrication de prémélanges.

9. Utilisation des compositions suivant l'une des revendications 6 et 7, pour la réduction de la perméabilité à la vapeur d'eau de feuilles ou de revêtements.

10. Utilisation d'amidon, de cellulose ou de leurs mélanges, comme intermédiaires de phases, lors de la fabrication de masses polymères contenant de la cire d'abeille ou de la cire d'ester montanique ou leurs mélanges.
